# EUROPEAN PATENT SPECIFICATION

(11) **EP 1 058 499 B1**
(45) Date of publication and mention of the grant of the patent: **17.03.2004**
(21) Application number: 99963689.7
(22) Date of filing: 21.12.1999
(51) Int. Cl.: A01K 5/02

(54) **AN IMPLEMENT FOR FEEDING AND/OR WATERING ANIMALS**
FUTTER- UND/ODER TRÄNKVORRICHTUNG FÜR TIERE
DISPOSITIF POUR NOURRIR ET/OU ABREUVER DES ANIMAUX

(30) Priority: 24.12.1998 NL 1010898; 15.04.1999 NL 1011799; 20.05.1999 NL 1012109; 02.07.1999 NL 1012504
(43) Date of publication of application: 13.12.2000
(73) Proprietor: Lely Enterprises AG, 6300 ZUG (CH)
(72) Inventor: VAN DEN BERG, Karel, NL-2971 BR Bleskensgraaf (NL)
(74) Representative: Corten, Maurice Jean F.M.
(86) International application number: PCT/NL1999/000793
(87) International publication number: WO 2000/038506

(56) References cited:
- EP-A- 0 272 716
- WO-A-86/01977
- WO-A-96/05723
- GB-A- 2 190 574
- US-A- 4 735 171

## Description

The invention relates to an implement according to the preamble of claim 1.

Such an implement is described in the non-published earlier application NL-A-1010898 and in the non-published earlier application NL-A-1011799. The former application discloses a feeding and/or drinking column for animals, such as cows, which is provided with troughs. The latter application discloses an implement for feeding and/or watering animals, in which the troughs overlap each other.

To the constructions described in the aforementioned applications there may be added a weighing device for weighing the amount of dosed feed and the amount of consumed feed. However, the existing weighing devices have the disadvantage of being difficult to integrate into the implements described in the aforementioned applications. Moreover, the existing weighing devices have a complicated construction and are very expensive.

The invention aims at obviating the above-mentioned drawbacks by means of an implement according to the characteristics of claim 1. In this manner only a few weighing units for weighing a plurality of troughs will suffice. According to an inventive feature, the implement is provided with a control unit for controlling the weighing device. The control unit is also adapted for processing the weighing data. According to again another inventive feature, the implement is provided with identification means which are disposed in the vicinity of the trough and with the aid of which an animal is identified and the control unit is activated. The weighing device is provided with at least one displacing device with a drive unit, such as a stepper motor, for displacing the weighing unit.

In a preferred embodiment the weighing device comprises a central axis around which the weighing unit is rotatably disposed. The position of the weighing unit relative to the troughs is determined by means of one or more positioning sensors with which the weighing unit is provided.

According to another inventive feature, the framework is provided with a guide means, such as a rail or a groove, and a guide element, such as a wheel or a toothed wheel, for guiding the weighing unit along the troughs. When the guide element consists of a toothed wheel, there is preferably provided a toothing on the guide means. The weighing device preferably comprises one or more drive units for displacing the weighing unit. When the drive unit consists of a stepper motor, a positioning sensor for establishing the position of the weighing unit relative to the trough is not required.

The weighing unit is preferably provided with a weighing sensor, such as a load cell or a strain gauge, for registering weighing data comprising the weight or at least part of the weight of the trough. In practice a load cell appears to be most satisfactory for establishing the weight of the trough in a cheap and accurate manner.

According to a last inventive feature, the implement is provided with a control unit for displacing the weighing unit.

The above-described implement operates according to the following method. An animal located in the vicinity of a relevant trough is identified with the aid of the identification means. The weighing unit is subsequently moved towards the relevant trough, whereupon feed and/or drink is supplied to the trough by means of the metering device, while the trough is weighed during and/or after metering. In this manner it is possible to determine the amount of feed in the trough during or after metering.

In accordance with another method, by means of the control unit the amount of feed and/or drink in the relevant trough is determined during the supply of feed and/or drink to the relevant trough, and/or immediately after the supply of feed and/or drink to the relevant trough, and/or during the time when the animal is eating, and/or after the animal has moved away from the relevant trough. In this manner it is possible to establish the amount of feed consumed by an animal. Moreover, it is possible to analyse the animal's eating behaviour and to make conclusions, on the basis thereof, concerning the animal's condition. For example, the speed at which an animal empties the relevant trough may be an indication of the animal's health.

According to a last method, by means of the control unit the remaining amount of feed and/or drink is established in the relevant trough before the feed and/or drink is supplied to the relevant trough, while the amount of feed and/or drink supplied to the relevant trough depends on the established remaining amount of feed and/or drink. In practice it occurs that an animal does not empty the relevant trough completely. In this situation, the remaining feed and/or drink in the relevant trough can be consumed by a next animal, so that it is possible to dose less feed and/or drink to the relevant trough. In practice this will produce a considerable saving of the amount of feed and/or drink.

The invention will now be explained in further detail with reference to the Figures.
Figure 1 is a plan view of an implement for feeding and/or watering animals, which implement is provided with a weighing device;
Figure 2 is a cross-section of Figure 1 according to the line II-II, and
Figure 3 is a cross-section of Figure 2 according to the line III-III.

The implement for feeding and/or watering animals is described in the non-published earlier Dutch application NL-A-1010898. The implement comprises troughs 1 which are disposed in a framework 2. A weighing unit 4 for weighing the troughs 1 is rotatably disposed on a central axis 5 extending in vertical direction. The framework is provided with a guide means 7 for guiding the weighing unit 4. The weighing unit 4 is moved along the guide means 7 by means of a drive unit 8. The position of the weighing unit 4 relative to the trough 1 is determined by means of a positioning sensor 6. This sensor may be constituted by a proximity switch, an ultrasonic sensor or a light sensor.

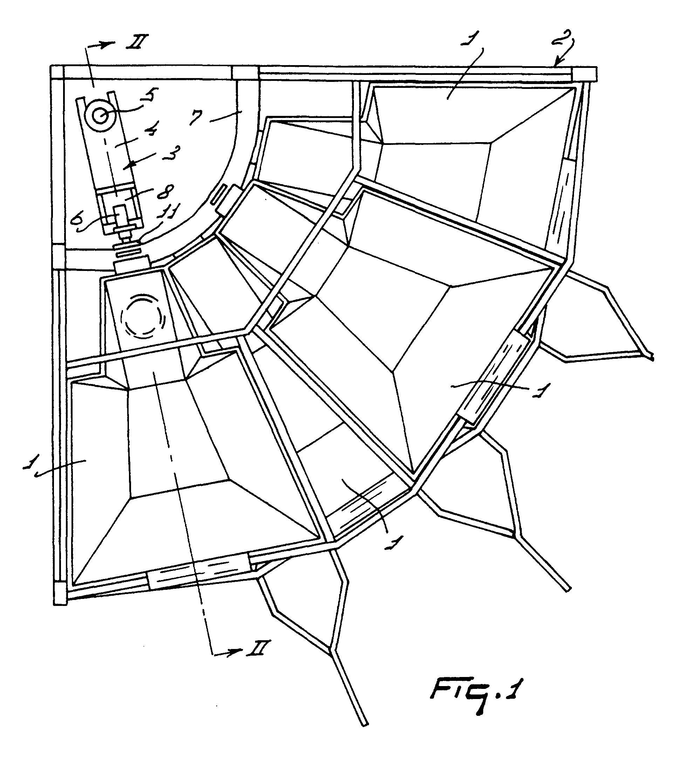

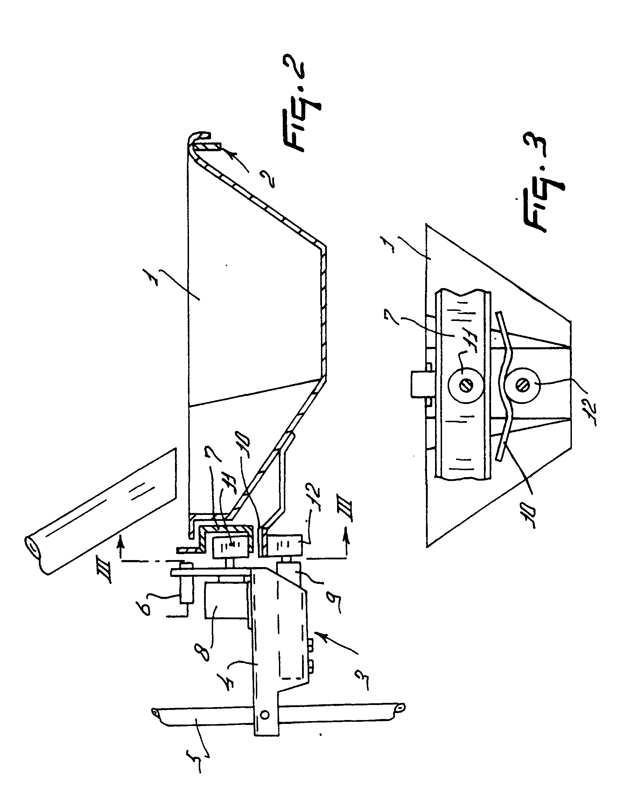

Figure 2 shows a cross-section of a detail of the implement in Figure 1. The weighing unit 4 is hingeably disposed on the central axis 5 and rests on the guide means 7 by means of the wheel 11 driven by the drive unit 8. The trough 1 is provided with a bracket 10 by means of which the trough is lifted, such that part of the weight of the trough rests on the roller 12 which is connected to the weighing sensor 9. Because of the fact that not the entire weight rests on the weighing sensor, the weighing data should be processed in order to determine the weight of the feed and/or drink in the trough. The positioning sensor 6 serves to determine the correct position of the weighing unit 4 relative to the trough to be weighed. When the guide means 7 is provided with a toothing, a stepper motor can be used as a drive in the drive unit 8. In that case, the determination of the position of the weighing unit relative to the trough can be omitted.

Figure 3 shows a detail of Figure 2 according to the cross-section III-III. The bracket 10 for lifting the trough is provided with curves as a result of which the roller 12 of the weighing unit 4 can easily lift the trough 1.

## Claims

1. An implement for feeding and/or watering animals, provided with a framework (2) in which a plurality of troughs (1) are disposed, a metering device for supplying feed and/or drink to a relevant trough (1), a weighing device (3) for weighing the amount of feed and/or drink, **characterized in that** the weighing device is provided with at least one movable weighing unit (4) for weighing the troughs (1).

2. An implement as claimed in claim 1, **characterized in that** the implement is provided with a control unit for controlling the weighing device.

3. An implement as claimed in claim 2, **characterized in that** the implement is provided with identification means which are disposed in the vicinity of the trough and with the aid of which an animal is identified and the control unit is activated.

4. An implement as claimed in any one of the preceding claims, **characterized in that** the weighing device is provided with at least one displacing device (8) with a drive unit, such as a stepper motor, for displacing the weighing unit (4).

5. An implement as claimed in any one of the preceding claims, **characterized in that** the weighing device (3) comprises a central axis (5) around which the weighing unit (4) is rotatably disposed.

6. An implement as claimed in any one of the preceding claims, **characterized in that** the weighing unit (4) is provided with one or more positioning sensors (6) for determining the position of the weighing unit (4) relative to the troughs (1).

7. An implement as claimed in any one of the preceding claims, **characterized in that** the framework (2) is provided with a guide means (7), such as a rail or a groove, and a guide element, such as a wheel or a toothed wheel, for guiding the weighing unit (4) along the troughs (1).

8. A method of feeding and/or watering animals by means of an implement as claimed in any one of the preceding claims, **characterized in that** an animal located in the vicinity of a relevant trough (1) is identified with the aid of the identification means, the weighing unit (4) is subsequently moved towards the relevant trough (1), whereupon feed and/or drink is supplied to the trough (1) by means of the metering device, while the trough (1) is weighed during and/or after metering.

9. A method as claimed in claim 8, **characterized in that** by means of the control unit the amount of feed and/or drink in the relevant trough (1) is determined during the supply of feed and/or drink to the relevant trough (1), and/or immediately after the supply of feed and/or drink to the relevant trough (1), and/or during the time when the animal is eating, and/or after the animal has moved away from the relevant trough (1).

10. A method as claimed in claim 8 or 9, **characterized in that** by means of the control unit the remaining amount of feed and/or drink is established in the relevant trough (1) before the feed and/or drink is supplied to the relevant trough (1), while the amount of feed and/or drink supplied to the relevant trough depends on the established remaining amount of feed and/or drink.

## Patentansprüche

1. Vorrichtung zum Füttern und/oder Tränken von Tieren mit einem Rahmen (2), in dem mehrere Tröge (1) angeordnet sind, einer Dosiervorrichtung zum Zuführen von Futter und/oder Trinkflüssigkeit zu einem entsprechenden Trog (1) und einer Wägevorrichtung (3) zum Wiegen der Menge an Futter und/oder Trinkflüssigkeit,
**dadurch gekennzeichnet, daß** die Wägevorrichtung mit mindestens einer beweglichen Wägeeinheit (4) zum Wiegen der Tröge (1) versehen ist.

2. Vorrichtung nach Anspruch 1,
**dadurch gekennzeichnet, daß** die Vorrichtung mit einer Steuereinheit zum Steuern der Wägevorrichtung versehen ist.

3. Vorrichtung nach Anspruch 2,
**dadurch gekennzeichnet, daß** die Vorrichtung mit einer Identifikationsvorrichtung versehen ist, die in der Nähe des Troges angeordnet ist, und mit deren Hilfe ein Tier identifiziert und die Steuereinheit aktiviert wird.

4. Vorrichtung nach einem der vorhergehenden Ansprüche,
**dadurch gekennzeichnet, daß** die Wägevorrichtung mindestens eine Verlagerungsvorrichtung (8) mit einer Antriebseinheit, wie z. B. einem Schrittmotor, zum Verlagern der Wägeeinheit (4) aufweist.

5. Vorrichtung nach einem der vorhergehenden Ansprüche,
**dadurch gekennzeichnet, daß** die Wägevorrichtung (3) eine Mittelachse (5) umfaßt, um die herum die Wägeeinheit (4) drehbar angeordnet ist.

6. Vorrichtung nach einem der vorhergehenden Ansprüche,
**dadurch gekennzeichnet, daß** die Wägeeinheit (4) mit einem oder mehreren Positionssensoren (6) versehen ist, um die Position der Wägeeinheit (4) relativ zu den Trögen (1) zu ermitteln.

7. Vorrichtung nach einem der vorhergehenden Ansprüche,
**dadurch gekennzeichnet, daß** der Rahmen (2) mit einer Führungsvorrichtung (7), wie z. B. einer Schiene oder einer Nut, und einem Führungselement, wie z. B. einem Rad oder einem Zahnrad, versehen ist, um die Wägeeinheit (4) an den Trögen (1) entlangzuführen.

8. Verfahren zum Füttern und/oder Tränken von Tieren mittels einer Vorrichtung nach einem der vorhergehenden Ansprüche,
**dadurch gekennzeichnet, daß** ein sich in der Nähe eines jeweiligen Troges (1) aufhaltendes Tier mit Hilfe der Identifikationsvorrichtung identifiziert wird, die Wägeeinheit (4) anschließend zu dem entsprechenden Trog (1) bewegt wird, worauf dem Trog (1) mittels der Dosiervorrichtung Futter und/oder Trinkflüssigkeit zugeführt wird, wobei der Trog (1) während und/oder nach dem Dosieren gewogen wird.

9. Verfahren nach Anspruch 8,
**dadurch gekennzeichnet, daß** mit Hilfe der Steuereinheit die Menge an Futter und/oder Trinkflüssigkeit in dem jeweiligen Trog (1) während der Zufuhr von Futter und/oder Trinkflüssigkeit zu dem betreffenden Trog (1) und/oder unmittelbar nach der Zufuhr von Futter und/oder Trinkflüssigkeit zu dem betreffenden Trog (1) ermittelt wird und/oder während das Tier frißt und/oder nachdem sich das Tier von dem betreffenden Trog (1) entfernt hat.

10. Verfahren nach Anspruch 8 oder 9,
**dadurch gekennzeichnet, daß** mit Hilfe der Steuereinheit die restliche Menge an Futter und/oder Trinkflüssigkeit in dem betreffenden Trog (1) ermittelt wird, bevor das Futter und/oder die Trinkflüssigkeit dem betreffenden Trog (1) zugeführt wird, wobei die Menge des dem betreffenden Trog zugeführten Futters und/oder der Trinkflüssigkeit von der ermittelten restlichen Menge an Futter und/oder Trinkflüssigkeit abhängt.

## Revendications

1. Dispositif pour alimenter et/ou abreuver des animaux, équipé d'un châssis dans lequel une pluralité d'auges (1) sont disposées, un appareil à doser en vue de fournir des aliments et/ou un breuvage à une auge (1) adéquate, un dispositif de pesage (3) en vue de peser la quantité d'aliments et/ou de breuvage, **caractérisé en ce que** le dispositif de pesage est équipé au moins d'une unité de pesage (4) mobile en vue de peser les auges (1).

2. Dispositif selon la revendication 1, **caractérisé en ce que** le dispositif est équipé d'une unité de contrôle en vue de contrôler le dispositif de pesage.

3. Dispositif selon la revendication 2, **caractérisé en ce que** le dispositif est équipé de moyens d'identification qui sont disposés dans le voisinage de l'auge et à l'aide desquels un animal est identifié et l'unité de contrôle activée.

4. Dispositif selon l'une quelconque des revendications précédentes, **caractérisé en ce que** le dispositif de pesage est équipé au moins d'un dispositif de déplacement (8) avec une unité d'entraînement, tel qu'un moteur pas-à-pas, en vue de déplacer l'unité de pesage (4).

5. Dispositif selon l'une quelconque des revendications précédentes, **caractérisé en ce que** le dispositif de pesage (3) comprend un axe central (5) autour duquel l'unité de pesage (4) est disposée de manière à pouvoir tourner.

6. Dispositif selon l'une quelconque des revendications précédentes, **caractérisé en ce que** l'unité de pesage (4) est équipée d'un ou de plusieurs capteurs (6) en vue de déterminer la position de l'unité de pesage (4) par rapport aux auges (1).

7. Dispositif selon l'une quelconque des revendications précédentes, **caractérisé en ce que** le châssis (2) est équipé de moyens de guidage (7), tels qu'un rail ou une rainure, et d'un élément de guidage, tel qu'une roue ou une roue dentée, en vue de guider l'unité de pesage (4) le long des auges (1).

8. Procédé pour alimenter et/ou abreuver des animaux au moyen d'un dispositif selon l'une quelconque des revendications précédentes, **caractérisé en ce qu'**un animal situé dans le voisinage d'une auge adéquate (1) est identifié à l'aide des moyens d'identification, l'unité de pesage (4) est par la suite déplacée en direction de l'auge adéquate (1), moyennant quoi, des aliments et/ou un breuvage sont fournis à l'auge (1) au moyen du dispositif de mesure, tandis que l'auge (1) est pesée pendant et/ou après le pesage.

9. Procédé selon la revendication 8, **caractérisé en ce que** au moyen de l'unité de contrôle, la quantité d'aliments et/ou de breuvage d'une auge adéquate (1) est déterminée pendant la fourniture d'aliments et/ou de breuvage à l'auge adéquate (1), et/ou immédiatement après la fourniture d'aliments et/ou de breuvage à l'auge adéquate (1), et/ou pendant le moment où l'animal mange, et/ou après que l'animal se soit éloigné de l'auge (1).

10. Procédé selon la revendication 8 ou 9, **caractérisé en ce que** au moyen de l'unité de contrôle, la quantité résiduelle d'aliments et/ou de breuvage est établie dans l'auge adéquate (1) avant que les aliments et/ou le breuvage soient fournis à l'auge adéquate (1), tandis que la quantité d'aliments et/ou de breuvage est fournie à l'auge adéquate en fonction de la quantité résiduelle d'aliments et/ou de breuvage établie.
